# EUROPÄISCHE PATENTSCHRIFT

(11) **EP 2 651 681 B1**
(45) Veröffentlichungstag und Bekanntmachung des Hinweises auf die Patenterteilung: **25.10.2017**
(21) Anmeldenummer: 11785609.6
(22) Anmeldetag: 19.11.2011
(51) Int. Cl.: B60K 6/36, B60K 6/547, F16H 3/00, B60W 20/10, B60K 6/48

(54) **HYBRIDANTRIEB**
HYBRID DRIVE
MOTORISATION HYBRIDE

(30) Priorität: 15.12.2010 DE 102010063092
(43) Veröffentlichungstag der Anmeldung: 23.10.2013
(73) Patentinhaber: Bayerische Motoren Werke Aktiengesellschaft, 80809 München (DE)
(72) Erfinder: FUNK, Kilian, Greer, South Carolina 29651-0000 (US); SCHLICHTE, Dirk, 80469 Muenchen (DE); FOERG, Martin, 85748 Garching (DE); DAUN, Nico, 80639 München (DE); OTTE, Alexander-Wilhelm, 82281 Wenigmünchen (DE); URBANEK, Matthias, 28816 Suhr (DE); HOESS, Bernhard, 80995 München (DE); NEUMANN, Lutz, 85375 Neufahrn (DE)
(86) Internationale Anmeldenummer: PCT/EP2011/005843
(87) Internationale Veröffentlichungsnummer: WO 2012/079683

(56) Entgegenhaltungen:
- EP-A1- 2 368 739
- WO-A1-2010/070707
- DE-A1- 10 133 695
- DE-A1- 19 960 621
- US-A1- 2010 311 540

## Beschreibung

Die vorliegende Erfindung betrifft einen Hybridantrieb gemäß dem Oberbegriff des Patentanspruches 1.

Ein derartiger Hybridantrieb ist aus der US 2010/0311540 A1 bekannt. Zum technischen Hintergrund der Erfindung zählen die nicht vorveröffentlichte EP 2 368 739 A1 sowie die WO 2010/070707 A1.

Bei vielen aus dem Stand der Technik bekannten Hybridkonzepten ist die Kurbelwelle eines Verbrennungsmotors über eine erste Kupplung mit dem Rotor einer elektrischen Maschine und über eine zweite Kupplung mit der Eingangswelle eines Stufenautomatikgetriebes verbunden. Im "Parallelbetriebsmodus", d. h. wenn das Fahrzeug gleichzeitig vom Verbrennungsmotor als auch von der elektrischen Maschine angetrieben wird, drehen der Verbrennungsmotor und die elektrische Maschine somit ein und derselben Drehzahl oder, wenn sie über eine "Übersetzung" miteinander gekoppelt sind, entsprechend einem vorgegebenen Drehzahlverhältnis, was energetisch nicht immer optimal ist.

Aufgabe der Erfindung ist es, ein neuartiges Hybridantriebskonzept zu schaffen, dass den oben beschriebenen Nachteilen herkömmlicher Hybridantriebskonzepte besser Rechnung trägt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Hybridantrieb mit einer ersten Antriebsmaschine, die durch eine elektrische Maschine gebildet sein kann, und einer zweiten Antriebsmaschine, die durch einen Verbrennungsmotor gebildet sein kann. Die beiden Antriebsmaschinen sind über eine "Drehmomentüberlagerungseinrichtung" miteinander gekoppelt sind. Der Begriff "Drehmomentüberlagerungseinrichtung" ist äußerst breit zu interpretieren. Gemeint ist ganz allgemein, dass die Antriebsleistung der beiden Antriebsmaschinen bzw. die betreffenden Antriebsmomente "zusammengeschaltet", d. h. überlagert werden können, z.B. mittels eines Summiergetriebes. Die Drehmomentüberlagerungseinrichtung weist dementsprechend einen ersten Drehmomenteingang auf, welcher der ersten Antriebsmaschine zugeordnet ist, und einen zweiten Drehmomenteingang, welcher der zweiten Antriebsmaschine zugeordnet ist, sowie einen Drehmomentausgang, über den das "zusammengeschaltete" Drehmoment auf Antriebsräder eines Fahrzeugs übertragen werden kann.

Im folgenden wird für die erste Antriebsmaschine der Begriff "elektrische Maschine" oder auch "E-Motor" und für die zweite Antriebsmaschine der Begriff "Verbrennungsmotor" verwendet, wobei dies nicht einschränkend zu verstehen ist.

Der Kern der Erfindung besteht darin, dass die elektrische Maschine über den ersten Drehmomenteingang mit einer "ersten Übersetzungseinrichtung". und der Verbrennungsmotor über den zweiten Drehmomenteingang mit einer "zweiten Übersetzungseinrichtung" der Drehmomentüberlagerungseinrichtung gekoppelt bzw. koppelbar ist und die Übersetzungseinrichtungen jeweils abtriebsseitig mit dem Drehmomentausgang gekoppelt, d.h. kinematisch verbunden sind. Dazu weisen erfindungsgemäss eine, vorzugsweise beide Übersetzungseinrichtungen mindestens zwei alternativ anwählbare Übersetzungen bzw. Übersetzungsstufen auf. Grundsätzlich kommen für die Übersetzungseinrichtungen verschiedene Ausführungen in Betracht, wie z.B. schaltbare Stirnradstufen, schaltbare Planetengetriebe, schaltbare Riemen- oder Kettentriebe etc., oder aber auch stufenlos schaltbare Übersetzungseinrichtungen.

Mit dem erfindungsgemäßen Hybridantrieb können die beiden "Leistungszweige" unabhängig voneinander geschaltet werden. Im Rahmen der verfügbaren Gänge können die Drehzahlen des Verbrennungsmotors und der elektrischen Maschine unabhängig voneinander gewählt werden. Der nicht von der Schaltung betroffene Leistungszweig stützt während der Schaltung mit seiner vollen Leistung die Zugkraft am Drehmomentausgang der Drehmomentüberlagerungseinrichtung ab. Der von der Schaltung betroffene Leistungszweig bzw. das betreffende Antriebsaggregat (elektrische Maschine bzw. Verbrennungsmotor) kann dabei zur "äußeren Synchronisation" der Schaltung eingesetzt werden.

Anders ausgedrückt, ergibt sich im Unterschied zu herkömmlichen Parallelhybridkonzepten der Vorteil, dass die elektrische Maschine und der Verbrennungsmotor im Parallelhybridbetrieb nicht stets in einem bestimmten, fest vorgegebenen Drehzahlverhältnis drehen müssen, sondern dass mindestens eine der beiden Antriebsmaschinen "in einen anderen Gang geschaltet" werden kann, was nicht nur unter Verbrauchsgesichtspunkten von Vorteil ist, sondern dem Antrieb eine bessere Dynamik verleiht.

Nach einer Weiterbildung der Erfindung weist die zweite, dem Verbrennungsmotor zugeordnete Übersetzungseinrichtung mindestens zwei und höchstens vier, vorzugsweise genau drei alternativ anwählbare Übersetzungsstufen auf.

Die mindestens zwei Übersetzungsstufen der zweiten Übersetzungseinrichtung sind hierbei so auszulegen, dass eine Übersetzungsstufe als höchstgeschwindigkeitstauglicher Fahrgang und eine weitere Übersetzungsstufe als Effizienzgang ausgebildet ist. Mit dem höchstgeschwindigkeitstauglichen Fahrgang ist es möglich, die Höchstgeschwindigkeit des Fahrzeugs zu fahren. Der Effizienzgang hingegen ist länger ausgelegt als der höchstgeschwindigkeitstaugliche Fahrgang und ermöglicht somit im mittleren und höheren Geschwindigkeitsbereich, bspw. auf der Landstraße oder Autobahn, einen wirkungsgradoptimierten Betrieb des Verbrennungsmotors.

Bei Beschränkung auf zwei in dieser Weise ausgelegte Übersetzungsstufen der zweiten Übersetzungseinrichtung ist die erste Übersetzungseinrichtung des Elektromotors und auch die Leistung des Elektromotors so auszulegen, dass der Fahrbetrieb des Fahrzeugs beim Anfahren und im unteren Geschwindigkeitsbereich, d.h. insbesondere im Stadtbetrieb, im Wesentlichen elektromotorisch dargestellt wird. Der Verbrennungsmotor liefert hier in aller Regel allenfalls eine Unterstützung durch Bereitstellung einer Grundlast.

Ein auf zwei Übersetzungsstufen der zweiten Übersetzungseinrichtung beschränkter, erfindungsgemäßer Hybridantrieb ist für hochelektrifizierte Antriebe mit höherer elektrischer Leistung zweckmäßig, d. h. die Spitzenleistung des Elektromotors sollte geringstens 30%, vorzugsweise mindestens 50% der Nennleistung des Verbrennungsmotors betragen, besser 80% und idealerweise mindestens 100%. Die Dauerleistung des Elektromotors kann hierbei jeweils etwa im für Elektromotoren üblichen Verhältnis ein Halb unter der Spitzenleistung liegen.

Je ausgeglichener sich die Leistungssituation zwischen Spitzenleistung des Elektromotors und Nennleistung des Verbrennungsmotors darstellt, desto besser kann der Elektromotor insbesondere bei Beschleunigungsvorgängen die dynamische Lastanforderung abdecken. Auch können sich die Antriebsaggregate insbesondere in Falle von Gangwechseln gegenseitig stützen, wodurch sehr komfortable Schaltvorgänge ohne oder mit nur geringem Zugkrafteinbruch während der Schaltung dargestellt werden können.

Besonders vorteilhaft ist es, wenn das Leistungsverhältnis zwischen Dauerleistung des Elektromotors und Nennleistung des Verbrennungsmotors in etwa ausgeglichen ist oder die Nennleistung des Verbrennungsmotors überschreitet, d.h. die Dauerleistung des Elektromotors etwa 80% der Nennleistung des Verbrennungsmotors ist oder darüber. In diesem Fall kann der Elektromotor auch in denjenigen Fahrsituationen, in denen der Fahrgang des Verbrennungsmotors noch nicht oder nur mit geringer Leistung betrieben werden kann -somit bei einer erfindungsgemäß ausgeführten Drehmomentüberlagerungseinrichtung mit beispielsweise nur zwei wie oben ausgeführt ausgelegten verbrennungsmotorischen Gängen beim Anfahren und im untersten Geschwindigkeitsbereich bis etwa 30 km/h-, die Vortriebsleistung erbringen und somit die Fahrfunktion rein oder überwiegend elektromotorisch darstellen, ohne dass die Fahrleistungen eingeschränkt wären. Würde die elektromotorische Spitzenleistung niedriger sein als die oben spezifizierte Mindestleistungsanforderung, so könnte der Elektromotor keine vollwertige Fahrfunktion mehr darstellen, sondern allenfalls den Fahrmodus des Verbrennungsmotors noch unterstützen (sogenanntes "assist"). Hiermit ließe sich die erfindungsgemäße Reduktion der heutzutage üblichen 6 oder mehr verbrennungsmotorischen Gänge auf einige wenige Gänge mit den hier benannten Vorteilen der Erfindung nicht mehr darstellen.

Durch die geringe Anzahl von Übersetzungsstufen der zweiten Übersetzungseinrichtung ist der bauteilseitige Aufwand gering bei insbesondere auch geringen Bauraumanforderungen. Darüber hinaus ist erfindungsgemäss vorgesehen, eine weitere Übersetzungsstufe der zweiten Übersetzungseinrichtung als Anfahrgang auszubilden. In diesem Fall könnte ein Anfahrelement, z.B. eine Anfahrkupplung, in den Hybridantrieb integriert werden. Der Anfahrgang kann gleichzeitig als Berggang im unteren Geschwindigkeitsbereich genutzt werden und sorgt dafür, dass auch in Situationen, in denen der Energieinhalt des elektrischen Speichersystems des Fahrzeugs nicht genügend Energie für einen Fahrbetrieb bereitstellen kann, ein verbrennungsmotorischer Fahrbetrieb möglich ist.

Insbesondere bei vergleichsweise geringen elektromotorischen Leistungen gemäß der oben angegebenen präferierten Bereiche kann es aus Dynamiksicht sinnvoll sein, noch eine weitere, vierte Übersetzungsstufe der zweiten Übersetzungseinrichtung vorzusehen, die übersetzungsseitig als weiterer, jedoch nicht höchstgeschwindigkeitstauglicher Fahrgang zwischen dem Anfahrgang und dem höchstgeschwindigkeitstauglichen Fahrgang angeordnet ist. Diese vierte Übersetzungsstufe wird insbesondere dann zum Einsatz kommen, wenn aus dem unteren Geschwindigkeitsbereich heraus beschleunigt wird.

Wenngleich die erste Übersetzungseinrichtung mit einer einzigen, nicht schaltbaren Übersetzungsstufe oder sogar unmittelbar (Übersetzung 1:1) ausgeführt sein kann, ist es von besonderem Vorteil, wenn auch die erste Übersetzungseinrichtung mit mindestens zwei alternativ anwählbaren Übersetzungsstufen ausgeführt ist.

Die "länger" ausgelegte Übersetzungsstufe ist hierbei vorzugsweise als höchstgeschwindigkeitstauglicher Gang des Fahrzeugs auszulegen. Hieraus ergibt sich der Vorteil, dass die kürzer ausgelegte Übersetzungsstufe als Dynamikgang genutzt werden kann mit einer für E-Motoren typischen hervorragenden Momentenbereitstellung, wohingegen die länger ausgelegte Übersetzungsstufe es ermöglicht, den E-Motor auch im hohen Geschwindigkeitsbereich bis zur Höchstgeschwindigkeit des Fahrzeugs angekoppelt zu lassen und somit sowohl für Bremsenergierückgewinnung als auch für "Boosten" mitzunutzen.

Nach einer Weiterbildung der Erfindung weist der Hybridantrieb genau eine einzige zur Erzeugung von Fahrzeugvortrieb vorgesehene elektrische Maschine auf, was einen vergleichsweise einfachen und kompakten und insbesondere auch kostengünstigen Aufbau ermöglicht. Dies umfasst natürlich auch solche Lösungen, bei denen beispielsweise zum Starten des Verbrennungsmotors eine weitere elektrische Maschine im Systemverbund integriert ist, wobei diese elektrische Maschine dann nicht zur Vortriebserzeugung genutzt wird.

Gemäß einer vorteilhaften Weiterbildung der Erfindung ist der Drehmomentausgang der Drehmomentüberlagerungseinrichtung als Abtriebswelle mit Abtriebszahnradstufe ausgebildet ist, wobei die Abtriebszahnradstufe vorzugsweise unmittelbar mit dem Differential der angetriebenen Fahrzeugachse des Kraftfahrzeugs verbunden ist.

Zum Anwählen der einzelnen Übersetzungsstufen der Übersetzungseinrichtungen sind erfindungsgemäss formschlüssige oder reibschlüssige "Schaltelemente" vorgesehen. Bei Stirnradstufen können z. B. Schaltmuffen vorgesehen sein. Um den Schaltkomfort zu verbessern, ist einem der formschlüssigen Schaltelemente oder allen formschlüssigen Schaltelementen jeweils eine Synchronisiereinrichtung zugeordnet. Da durch den Verbrennungsmotor bzw. durch die elektrische Maschine bereits eine "äußere" Vorsynchronisation möglich ist, können auch einfachere, kostengünstige Schaltelemente zum Einsatz kommen, wie z. B. Schiebemuffen mit Klauenkupplungen ohne Synchronisiereinheiten, wie sie z. B. von Motorradgetrieben bekannt sind. Eine "äußere Synchronisation" kann durch eine entsprechende Drehzahlregelung des Verbrennungsmotors bzw. der elektrischen Maschine realisiert werden.

Werden als Übersetzungseinrichtungen Planetengetriebe eingesetzt, so kommen als Schaltelemente insbesondere Reibkupplungen bzw. Reibbremsen in Betracht. Prinzipiell könnten aber auch bei schaltbaren Stirnradstufen reibschlüssige Schaltelemente verwendet werden.

Eine Abkopplung der elektrischen Maschine bzw. des Verbrennungsmotors von der Drehmomentüberlagerungseinrichtung ist sehr einfach möglich, indem man das bzw. die betreffenden Schaltelemente in "Neutralstellung" schaltet. Unter dem Begriff "Neutralstellung" wird eine Stellung verstanden, in der keine Drehmomentübertragung von der elektrischen Maschine bzw. von dem Verbrennungsmotor auf die Drehmomentüberlagerungseinrichtung möglich ist. Dadurch wird sowohl ein rein elektrischer Fahrantrieb ermöglicht als auch ein Abkoppeln des Verbrennungsmotors zur Reduzierung von Schleppmomenten oder ein rein verbrennungsmotorischer Antrieb, wobei die elektrische Maschine abgekoppelt ist.

Zusammenfassend werden mit der Erfindung insbesondere folgende Vorteile erreicht:
- Die unabhängige Schaltbarkeit der beiden Leistungszweige ermöglicht eine gegenseitige Zugkraftunterstützung. Dadurch erhöht sich der Komfort gegenüber herkömmlichen Hybridkonzepten, bei denen ein eingelegter Getriebegang stets beiden Leistungszweigen "aufgeprägt" wird.
- Das erfindungsgemäße Hybridkonzept erlaubt eine freie Skalierbarkeit der Antriebsaggregate und ist somit nicht nur für herkömmliche Hybridkonzepte geeignet, sondern insbesondere auch für sogenannte Plug-in-Hybridkonzepte.
- Die unabhängige Wahl der Betriebspunkte für den Verbrennungsmotor und die elektrische Maschine eröffnet hohe Potentiale zur Verbrauchs-und Emmisionsreduktion, zur Verbesserung der Antriebsakustik sowie zur Steigerung der Fahrleistungen.
- Durch die "Summierfunktion" der Drehmomentüberlagerungseinrichtung können sich der Verbrennungsmotor und die elektrische Maschine im Betrieb optimal ergänzen. Dadurch ergeben sich Einspar- und Effizienzpotentiale, was wiederum eine "Entfeinerung" der beiden Antriebsaggregate ermöglicht. "Enifeinerung" bedeutet, dass die elektrische Maschine im Unterschied zu herkömmlichen Hybridkonzepten nicht mehr über den gesamten Drehzahlbereich höchsten Wirkungsgradanforderungen genügen muss.
- Mit dem erfindungsgemäßen Hybridantrieb lässt sich im Fahrbetrieb wahlweise Mischbetrieb, d.h. beide Antriebsaggregate sind im Eingriff und liefern fahrsituationsabhängig positives (antreibendes) oder auch negatives (gilt nur für E-Motor im generatorischen Betrieb) Moment, oder auch rein elektrischer Betrieb im Sinne einer e-Fahrfunktion darstellen.

Im Folgenden wird die Erfindung im Zusammenhang mit der Zeichnung näher erläutert. Es zeigen:
- Figur 1: das Grundprinzip der Erfindung in schematischer Darstellung;
- Figur 2: das in Figur 1 gezeigte Konzept mit einer zusätzlichen Zwischenwelle; und
- Figur 3: eine weitere Ausführungsform des erfindungsgemäßen Hybridantriebs.

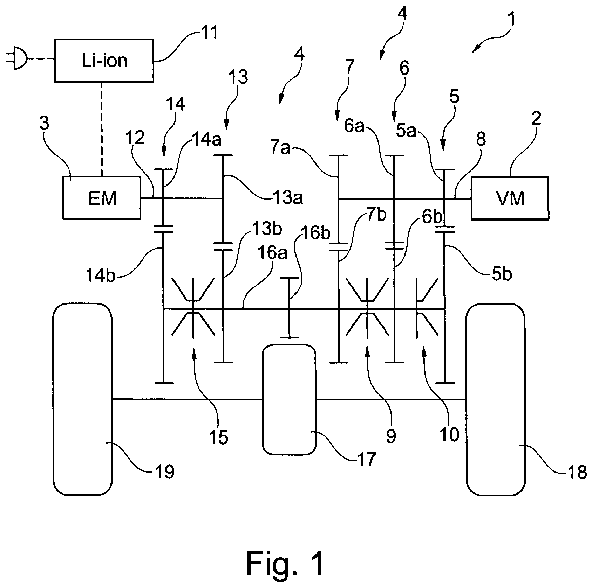

Figur 1 zeigt in einer Grundprinzipdarstellung einen erfindungsgemäß ausgeführten Hybridantrieb 1 mit einem Verbrennungsmotor 2, einer elektrischen Maschine 3 und einer Drehmomentüberlagerungseinrichtung 4. In Figur 1 nicht dargestellt sind Gehäuse der Komponenten, Aktuatorik, Ölversorgungen zur Schmierung von Lagerstellen und dergleichen mehr.

Die als Summiergetriebe ausgeführte Drehmomentüberlagerungseinrichtung 4 in Figur 1 weist einen ersten Drehmomenteingang 12, einen zweiten Drehmomenteingang 8, einen Drehmomentausgang 16a und 16b sowie eine erste Übersetzungseinrichtung, die zwei Übersetzungsstufen 13 und 14 umfasst, und eine zweite Übersetzungseinrichtung, die drei Übersetzungsstufen 5, 6 und 7 umfasst, auf. Die Drehmomenteingänge 8 und 12 sind hier jeweils als Eingangswellen ausgebildet. Die Läuferwelle der elektrischen Maschine 3 ist mit dem ersten Drehmomenteingang 12 der Drehmomentüberlagerungseinrichtung 4 und die Kurbelwelle des Verbrennungsmotors 2 mit dem zweiten Drehmomenteingang 8 der Drehmomentüberlagerungseinrichtung 4 jeweils mittels nicht dargestellter Wellenverbindungen gekoppelt. Der erste Drehmomenteingang 12 ist mit der ersten Übersetzungseinrichtung und der zweite Drehmomenteingang 8 mit der zweiten Übersetzungseinrichtung verbunden, wobei diese Verbindung hier lediglich in einer Fortführung der jeweiligen Eingangswelle 8 und 12 und einer dem Fachmann geläufigen Anbringung der jeweiligen Festräder der Stirnradsatzpaarungen 5a und 5b, 6a und 6b, die die jeweiligen Übersetzungsstufen 5, 6, 7; 13, 14 bilden, auf den Eingangswellen 8 und 12 besteht.

Abtriebsseitig sind die Losräder 5b, 6b, 7b, 13b, 14b der Übersetzungsstufen 5, 6, 7; 13, 14 auf der Abtriebswelle 16a angeordnet. Zur Erzeugung einer drehfesten Wirkverbindung zwischen den Losrädern 5b, 6b, 7b, 13b, 14b und der Abtriebswelle 16a sind in dem in Figur 1 dargestellten Prinzipschaltbild Schaltklauen 9, 10 und 15 angeordnet. Wirkprinzip und alternative Ausführungsformen solcher Schaltklauen sind dem Fachmann bekannt.

Die Abtriebswelle 16a bildet zusammen mit dem drehfest auf der Abtriebswelle 16a angebrachten Abtriebsstirnrad 16b den Drehmomentausgang der Drehmomentüberlagerungseinrichtung 4.

Das Abtriebsstirnrad 16b ist in der hier dargestellten Fahrzeuganordnung mit einem Abtriebsdifferential 17 im Eingriff, welches wiederum in einer dem Fachmann bekannten Anordnung über Abtriebswellen mit den angetriebenen Rädern 18 und 19 in Wirkverbindung steht.

Der Verbrennungsmotor 2 ist hier durch die als "Verbrennungsmotorteilgetriebe" ausgeführte zweite Übersetzungseinrichtung, die durch die drei Zahnradstufen 5, 6, 7 gebildet ist, mit der Abtriebswelle 16a koppelbar. Jede der Zahnradstufen 5, 6, 7 weist ein drehfest mit der Kurbelwelle des Verbrennungsmotors 2 verbundenes Zahnrad 5a, 6a, 7a auf. Die Zahnräder 5a, 6a, 7a kämmen mit zugeordneten Zahnrädern 5b, 6b, 7b, die jeweils drehbar auf der Abtriebswelle 16a angeordnet sind.

Zum Schalten der "drei Gänge" des Verbrennungsmotorteilgetriebes sind hier ein Doppelschaltelement 9 und ein Einfachschaltelement 10 vorgesehen. Jedem der Schaltelemente kann für jeden der Gänge jeweils eine hier nicht näher dargestellte Synchronisierungseinrichtung zugeordnet sein. Über das Verbrennungsmotorteilgetriebe kann Drehmoment bzw. Antriebsleistung von der Kurbelwelle 8 des Verbrennungsmotors 2 auf die Abtriebswelle 16a der Drehmomentüberlagerungseinrichtung 4 und von hier über das Abtriebsstirnrad 16b auf das Abtriebsdifferential 17 übertragen werden.

Die elektrische Maschine 3 ist mit einem elektrischen Energiespeicher, z. B. einer Lithium-Ionenbatterie 11, elektrisch verbunden. Arbeitet die elektrische Maschine 3 motorisch, so wird dieser von der Batterie 11 mit elektrischer Energie gespeist. Arbeitet die elektrische Maschine 3 generatorisch, so wird die generatorisch erzeugte Leistung in die Batterie 11 eingespeist.

Die elektrische Maschine 3 weist eine Läuferwelle auf, die über eine in Figur 1 nicht dargestellte Flanschverbindung mit dem ersten Drehmomenteingang verbunden ist. Der erste Drehmomenteingang ist wie auch bereits der zweite Drehmomenteingang 8 hier als Eingangswelle 12 ausgebildet. Die Läuferwelle 12 ist über zwei schaltbare Zahnradstufen 13, 14 welche quasi "ein Teilgetriebe der elektrischen Maschine 3" bilden, mit der Abtriebswelle 16a koppelbar. Die Zahnradstufen 13, 14 weisen jeweils ein drehfest auf der Eingangswelle 12 angeordnetes Zahnrad 13a bzw. 14a auf, die jeweils mit einem zugeordneten Zahnrad 13b, 14b kämmen, welche drehbar auf der Abtriebswelle 16a angeordnet sind. Den beiden drehbar angeordneten Zahnrädern 13b, 14b ist ein Doppelschaltelement 15 zugeordnet, über das die elektrische Maschine 3 wahlweise über die Zahnradstufe 13 oder über die Zahnradstufe 14 mit der Abtriebswelle 16a drehgekoppelt werden kann.

Das drehfest auf der Abtriebswelle 16a angeordnete Zahnrad 16b bildet den "Drehmomentausgang" der Drehmomentüberlagerungseinrichtung 4. Das Zahnrad 16b kämmt mit einem hier nicht näher dargestellten Antriebsrad eines Differentialgetriebes 17, welches die von dem Verbrennungsmotor 2 und der elektrischen Maschine 3 erzeugte Antriebsleistung in Antriebsräder 18, 19 eines hier nicht näher dargestellten Fahrzeug einspeist.

Die Übersetzungsverhältnisse der als Zahnradpaarungen ausgebildeten Übersetzungsstufen 5, 6, 7, somit die schaltbaren Gänge des Verbrennungsmotors, sind hier so gewählt, dass der erste Gang (= Übersetzungsstufe 5) als Anfahrgang oder auch als Berggang bei niedrigen Geschwindigkeiten bis etwa 40 km/h genutzt werden kann, der zweite Gang (= Übersetzungsstufe 6) als Fahrgang unter der Bedingung ausgelegt ist, eine stabile Höchstgeschwindigkeit darstellen zu können, und der dritte Gang (= Übersetzungsstufe 7) als Effizienzgang mit einer längeren Auslegung als der Fahrgang ausgelegt ist.

Die Übersetzungsverhältnisse der als Zahnradpaarungen ausgebildeten Übersetzungsstufen 13, 14, somit die schaltbaren Gänge des Elektromotors, sind hier so gewählt, dass der erste Gang (= Übersetzungsstufe 14) als Dynamikgang mit kurzer Übersetzung und der zweite Gang (= Übersetzungsstufe 13) als höchstgeschwindigkeitstauglicher Gang ausgelegt ist.

Leistungsseitig sind die Antriebsaggregate hier so ausgelegt, dass mittels der Nennleistung des Verbrennungsmotors eine stabile Höchstgeschwindigkeit dargestellt werden kann. Bei typischen Kleinfahrzeugen mit ca. 1200 kg Leergewicht und einer Höchstgeschwindigkeit von größer 160 km/h bedeutet dies eine Mindestleistung des Verbrennungsmotors von ca. 50 kW.

Ist die Nennleistung des Verbrennungsmotors niedrig gewählt (in dem hier beschriebenen Fall bei ca. 50 kW), so sollte die Dauerleistung des Elektromotors im Bereich der Nennleistung des Verbrennungsmotors liegen.

Ist hingegen die Nennleistung des Verbrennungsmotors größer gewählt, so reicht es aus, die Spitzenleistung des Elektromotors in etwa entsprechend der Nennleistung des Verbrennungsmotors zu wählen. Unter Spitzenleistung des Elektromotors ist die Leistung zu verstehen, die ein Elektromotor kurzzeitig, üblicherweise über ca. 10 Sekunden, abgeben kann. Die Spitzenleistung ist typischerweise ca. doppelt so hoch wie die Dauerleistung des Elektromotors.

Mit dem in Figur 1 dargestellten, erfindungsgemäß ausgebildeten Hybridantrieb 1 ist es grundsätzlich möglich, das für den Vortrieb des Fahrzeugs erforderliche Vortriebsmoment rein verbrennungsmotorisch oder rein elektromotorisch oder im Mischbetrieb, d.h. beide Antriebsaggregate sind im Eingriff, zu erzeugen.

Darüber hinaus kann der Elektromotor motorisch oder auch generatorisch betrieben werden, so dass neben einer Rückgewinnung der Bremsenergie auch elektrische Energie über Lastpunktanhebung des Verbrennungsmotors darstellbar ist.

Ein Vorteil der Erfindung gegenüber aus dem Stand der Technik bekannten Lösungen für Hybridantriebe besteht darin, dass die Aggregate unabhängig voneinander geschaltet werden können, d.h. der Aggregatebetriebspunkt des Verbrennungsmotors und des Elektromotors unabhängig voneinander eingestellt werden können.

So ist es beispielsweise möglich, den Verbrennungsmotor in seinem Effizienzgang zu betreiben und gleichzeitig den Elektromotor in seinem Dynamikgang. Dies stellt sicher, dass die für den Vortrieb des Fahrzeugs erforderliche "Grundlast" wirkungsgradoptimiert über den Verbrennungsmotor erzeugt wird und gleichzeitig eine hohe Dynamik mittels dem Elektromotor durch die Elektromotor-typische Momentencharakteristik bei kurzer Übersetzung des Dynamikgangs sichergestellt ist.

Weiterhin kann der Elektromotor durch die schaltbare zweite Übersetzungsstufe 13 auch bis zur Höchstgeschwindigkeit des Fahrzeugs im Antriebsstrang eingebunden bleiben, so dass auch bei sehr hohen Geschwindigkeiten noch Vortriebsmoment durch den Elektromotor erzeugt werden kann oder im Verzögerungsfall Brems- oder Verzögerungsenergie rekuperiert werden kann. Bei aus dem Stand der Technik bekannten 1-Gang-Lösungen muss hier entweder die Höchstgeschwindigkeit des Fahrzeugs limitiert werden oder der Elektromotor abgekoppelt werden.

Auch kann der Elektromotor durch die zwei Übersetzungsstufen wirkungsgradoptimiert betrieben werden.

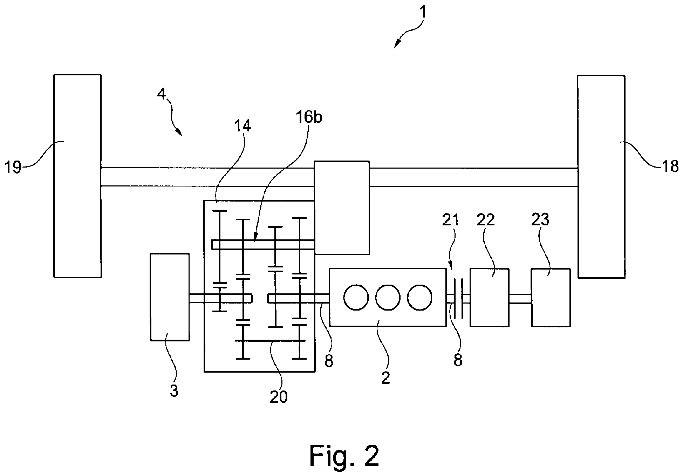

Figur 2 zeigt eine Variante des Hybridkonzepts der Figur 1. Hier ist zusätzlich eine Zwischenwelle 20 vorgesehen, die es ermöglicht, die Übersetzungsstufe 14 der elektrischen Maschine 3 zu nutzen, um einen kurz übersetzten Anfahrgang des Verbrennungsmotors 2 darzustellen. Die auf der Abtriebswelle 16a angeordneten Radsätze der Übersetzungsstufen sind hierzu wie in Figur 1 als schaltbare Losräder ausgeführt. Diese Konstellation dient auch dazu, im Stand die Batterie (nicht dargestellt) über die elektrische Maschine 3 zu laden.

Alternativ zu der in Figur 2 gezeigten Anordnung könnte die elektrische Maschine auch an die Zwischenwelle 20 angekoppelt sein.

Bei dem in Figur 2 gezeigten Ausführungsbeispiel ist die Kurbelwelle 8 des Verbrennungsmotors 2 ferner über eine Kupplung 21 mit einer zweiten elektrischen Maschine 22 koppelbar, welche ein Nebenaggregat 23, bei dem es sich beispielsweise um einen Klimaanlagenkompressor handeln kann, antreibt.

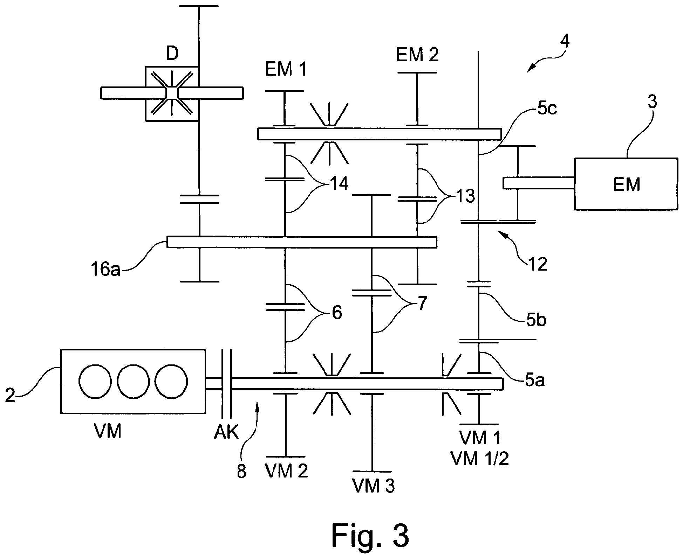

In Figur 3 ist eine weitere Ausführungsform der Erfindung in 3-Wellen-Anordnung dargestellt, wobei die 3 Wellen zueinander achsparallel angeordnet sind. Aufbau und Wirkweise entsprechen den Ausführungen zu den obigen Ausführungsformen, wobei die als Anfahr- und Berggang ausgeführte erste Übersetzungsstufe VM1 des Verbrennungsmotors hier über eine Mitnutzung des elektromotorischen Teilgetriebes über EM1, somit über die Zahnräder 5a, 5b, 5c und 14, dargestellt wird.

Zusätzlich lässt sich hier noch ein übersetzungsseitig zwischen VM1 und VM2 angeordneter vierter Gang VM1/2 darstellen, bei dem die Mitnutzung des elektromotorischen Teilgetriebes über EM2, somit über die Zahnräder 5a, 5b, 5c und 13, läuft. In diesen Fällen mit Gangwahl VM1 oder VM1/2 lässt sich allerdings der Elektromotor nicht mehr unabhängig vom Verbrennungsmotor schalten, sondern für die Gangwahl VM1 ist auch eine Gangwahl EM 1 erforderlich und für die Gangwahl VM1/2 die Gangwahl EM2.

Auch in der in Figur 3 dargestellten Ausführungsform der Erfindung ist Standladen, d. h. ein Laden des elektrischen Energiespeichers mittels generatorischem Betrieb des Elektromotors mit Antreiben durch den Verbrennungsmotor im Standfall des Fahrzeugs möglich.

Zusätzlich ist in Figur 3 eine zwischen Verbrennungsmotor und Drehmomenteingang der Drehmomentüberlagerungseinrichtung angeordnete Anfahrkupplung AK dargestellt, die dazu dient, ein verbrennungsmotorisches Anfahren über VM1 zu ermöglichen.

## Patentansprüche

1. Hybridantrieb (1) für Kraftfahrzeuge, insbesondere für Personenkraftfahr-zeuge, mit
- einem Verbrennungsmotor (2),
- einer elektrischen Maschine (3), und
- einer Drehmomentüberlagerungseinrichtung (4), mittels der ein vom Verbrennungsmotor (2) geliefertes Drehmoment mit einem von der elektrischen Maschine (3) gelieferten Drehmoment überlagerbar ist, wobei die Drehmomentüberlagerungseinrichtung (4) einen ersten und einen zweiten Drehmomenteingang (12, 8) und einen Drehmomentausgang (16) sowie eine erste Übersetzungseinrichtung (13, 14) und eine zweite Übersetzungseinrichtung (5, 6, 7) aufweist,
und die elektrische Maschine (3) mit dem ersten Drehmomenteingang (12) und der Verbrennungsmotor (2) mit dem zweiten Drehmomenteingang (8) koppelbar ist, wobei der erste Drehmomenteingang (12) mit der ersten Übersetzungseinrichtung (13, 14) und der zweite Drehmomenteingang (8) mit der zweiten Übersetzungseinrichtung (5, 6, 7) verbunden ist, und die Übersetzungseinrichtungen (5, 6, 7; 13, 14) jeweils abtriebsseitig mit dem Drehmomentausgang (16) gekoppelt sind, wobei
zumindest eine der beiden Übersetzungseinrichtungen mindestens zwei alternativ anwählbare Übersetzungsstufen (5, 6, 7; 13, 14) aufweist, **dadurch gekennzeichnet, dass**
• zum Anwählen einzelner Übersetzungsstufen (5 - 7; 13, 14) formschlüssige oder reibschlüssige Schaltelemente (9, 10, 15) vorgesehen sind, wobei einem der formschlüssigen Schaltelemente (9, 10, 15) oder allen formschlüssigen Schaltelementen (9, 10, 15) jeweils eine Synchronisiereinrichtung zugeordnet ist,
• die Übersetzungsstufen der zweiten Übersetzungseinrichtung so ausgelegt sind, dass eine Übersetzungsstufe als höchstgeschwindigkeitstauglicher Fahrgang und eine weitere Übersetzungsstufe als Effizienzgang ausgebildet ist und
• eine weitere Übersetzungsstufe der zweiten Übersetzungseinrichtung als Anfahrgang ausgebildet ist.

2. Hybridantrieb nach Anspruch 1, **dadurch gekennzeichnet, dass** beide Übersetzungseinrichtungen jeweils mindestens zwei alternativ anwählbare Übersetzungsstufen (5, 6, 7; 13, 14) aufweisen.

3. Hybridantrieb nach einem der Ansprüche 1 oder 2, **dadurch gekennzeichnet, dass** die zweite Übersetzungseinrichtung (5 -7) zwischen zwei und vier, insbesondere genau drei, alternativ anwählbare Übersetzungsstufen (5, 6, 7) aufweist.

4. Hybridantrieb nach einem der Ansprüche 1 bis 3, **dadurch gekennzeichnet, dass** die erste Übersetzungseinrichtung genau zwei alternativ anwählbare Übersetzungsstufen (13, 14) aufweist, wobei die länger ausgelegte Übersetzungsstufe vorzugsweise als höchstgeschwindigkeitstauglicher Gang des Fahrzeugs ausgelegt ist.

5. Hybridantrieb (1) nach einem der Ansprüche 1 bis 4, **dadurch gekennzeichnet, dass** der Hybridantrieb (1) genau eine elektrische, fahrzeugvortriebserzeugende Maschine (3) aufweist.

6. Hybridantrieb (1) nach einem der Ansprüche 1 bis 5, **dadurch gekennzeichnet, dass** der Drehmomentausgang der Drehmomentüberlagerungseinrichtung als Abtriebswelle mit Abtriebszahnradstufe (16) ausgebildet ist, wobei die Abtriebszahnradstufe (16) vorzugsweise unmittelbar mit einem Differential der angetriebenen Fahrzeugachse des Kraftfahrzeugs verbunden ist.

7. Hybridantrieb (1) nach einem der vorhergehenden Ansprüche, **dadurch gekennzeichnet, dass** die Drehmomentüberlagerungseinrichtung (4) drei Wellen umfasst, wobei die erste Welle mit dem ersten Drehmomenteingang, die zweite Welle mit dem zweiten Drehmomenteingang und die dritte Welle mit dem Drehmomentausgang verbunden ist und die Übersetzungsstufen der Übersetzungseinrichtungen als Stirnradsätze, die auf den jeweiligen Wellen angeordnet sind, ausgeführt sind.

8. Hybridantrieb (1) nach Anspruch 7, **dadurch gekennzeichnet, dass** der Anfahrgang der zweiten Übersetzungseinrichtung und/oder ein zusätzlicher, als Zwischengang ausgeführter Fahrgang der zweiten Übersetzungseinrichtung über Mehrfachnutzung der Stirnradsätze dargestellt ist.

9. Hybridantrieb (1) nach einem der vorhergehenden Ansprüche, **dadurch gekennzeichnet, dass** eine Nennleistung des Verbrennungsmotors gleich oder größer dem Leistungsbedarf bei Höchstgeschwindigkeit des Kraftfahrzeugs ist und eine Spitzenleistung des Elektromotors größer 80 % der Nennleistung des Verbrennungsmotors ist.

10. Hybridantrieb (1) nach Anspruch 9, **dadurch gekennzeichnet, dass** die Nennleistung des Verbrennungsmotors maximal dem 1,5-fachen des Leistungsbedarfs bei Höchstgeschwindigkeit des Kraftfahrzeugs ist und eine Dauerleistung des Elektromotors größer 80 % der Nennleistung des Verbrennungsmotors ist.

## Claims

1. A hybrid drive (1) for motor vehicles, especially for passenger vehicles, with
- an internal combustion engine (2),
- an electric machine (3), and
- a torque overlay device (4) by means of which a torque supplied by the internal combustion engine (2) can be overlaid with a torque supplied by the electric machine (3), wherein the torque overlay device (4) has a first and a second torque input (12, 8) and a torque output (16) and also a first transmission device (13, 14) and a second transmission device (5, 6, 7),
and the electric machine (3) can be coupled with the first torque input (12) and the internal combustion engine (2) with the second torque input (8), wherein the first torque input (12) is connected to the first transmission device (13, 14) and the second torque input (8) to the second transmission device (5, 6, 7), and the transmission devices (5, 6, 7; 13, 14) are coupled in each case on the output side with the torque output (16),
wherein
at least one of the two transmission devices has at least two alternatively selectable transmission stages (5, 6, 7; 13, 14),
**characterised in that**
• positively locking or frictionally locking shift elements (9, 10, 15) are provided for selecting individual transmission stages (5 - 7; 13, 14), wherein one synchronising means in each case is associated with one of the positively locking shift elements (9, 10, 15) or all of the positively locking shift elements (9, 10, 15),
• the transmission stages of the second transmission device are designed such that one transmission stage is designed as a driving gear suitable for maximum speed and a further transmission stage is designed as an efficiency gear, and
• a further transmission stage of the second transmission device is formed as a starting gear.

2. A hybrid drive according to Claim 1, **characterised in that** both transmission devices have in each case at least two alternatively selectable transmission stages (5, 6, 7; 13, 14).

3. A hybrid drive according to one of Claims 1 or 2, **characterised in that** the second transmission device (5 - 7) has between two and four, especially exactly three, alternatively selectable transmission stages (5, 6, 7).

4. A hybrid drive according to one of Claims 1 to 3, **characterised in that** the first transmission device has precisely two alternatively selectable transmission stages (13, 14), the transmission stage which is designed longer preferably being designed as the gear of the vehicle which is suitable for maximum speed.

5. A hybrid drive (1) according to one of Claims 1 to 4, **characterised in that** the hybrid drive (1) has exactly one electric machine (3) generating vehicle propulsion.

6. A hybrid drive (1) according to one of Claims 1 to 5, **characterised in that** the torque output of the torque overlay device is formed as an output shaft with output gearwheel stage (16), wherein the output gearwheel stage (16) is connected preferably directly to a differential of the driven vehicle axle of the motor vehicle.

7. A hybrid drive (1) according to one of the preceding claims, **characterised in that** the torque overlay device (4) comprises three shafts, the first shaft being connected to the first torque input, the second shaft to the second torque input and the third shaft to the torque output, and the transmission stages of the transmission devices being embodied as sets of spur gears which are arranged on the respective shafts.

8. A hybrid drive (1) according to Claim 7, **characterised in that** the starting gear of the second transmission device and/or an additional driving gear embodied as an intermediate gear of the second transmission device is represented by multiple use of the sets of spur gears.

9. A hybrid drive (1) according to one of the preceding claims, **characterised in that** a nominal power of the internal combustion engine is equal to or greater than the power requirement at maximum speed of the motor vehicle, and a peak power of the electric motor is greater than 80% of the nominal power of the internal combustion engine.

10. A hybrid drive (1) according to Claim 9, **characterised in that** the nominal power of the internal combustion engine is at most 1.5 times the power requirement at maximum speed of the motor vehicle, and a continuous power of the electric motor is greater than 80% of the nominal power of the internal combustion engine.

## Revendications

1. Système d'entraînement hybride (1) destiné à des véhicules, en particulier à des véhicules de tourisme comprenant :
- un moteur à combustion interne (2),
- une machine électrique (3), et
- un dispositif de superposition de couple de rotation (4) par l'intermédiaire duquel un couple de rotations fourni par le moteur à combustion interne (2) peut être superposé à un couple de rotation fourni par la machine électrique (3),
le dispositif de superposition de couple de rotation (4) comprenant une première et une seconde entrées de couple de rotation (12, 8) et une sortie de couple de rotation (16) ainsi qu'un premier dispositif de transmission (13, 14) et un second dispositif de transmission (5, 6, 7), et
la machine électrique (3) pouvant être couplée à la première entrée de couple de rotation (12) et le moteur à combustion interne (2) pouvant être couplé à la seconde entrée de couple de rotation (8), la première entrée de couple de rotation (12) étant reliée au premier dispositif de transmission (13, 14) et la seconde entrée de couple de rotation (8) étant reliée au second dispositif de transmission (5, 6, 7), et les dispositifs de transmission (5, 6, 7, 13, 14) étant respectivement couplés, côté sortie à la sortie de couple de rotation (16),
au moins l'un des deux dispositifs de transmission comprenant au moins deux étages de transmission (5, 6, 7, 13, 14) pouvant être alternativement sélectionnés,
**caractérisé en ce que**
pour permettre la sélection des différents étages de transmission (5 - 7, 13, 14) il est prévu des éléments de commutation par la forme ou par friction (9, 10, 15), à l'un des éléments de commutation par la forme (9, 10, 15) ou à tous les éléments de commutation par la forme (9, 10, 15) étant respectivement associé un dispositif de synchronisation,
les étages de transmission du second dispositif de transmission sont conçus de sorte qu'un étage de transmission soit réalisé sous la forme d'un rapport de vitesse plus adapté à la vitesse maximum, et qu'un autre étage de transmission soit réalisé sous la forme d'un rapport d'efficacité, et
un autre étage de transmission du second dispositif de transmission est réalisé sous la forme d'un rapport de démarrage.

2. Système d'entraînement hybride conforme à la revendication 1,
**caractérisé en ce que**
les deux dispositifs de transmission comportent chacun au moins deux étages de transmission pouvant être alternativement sélectionnés (5, 6, 7, 13, 14).

3. Système d'entraînement hybride conforme à l'une des revendications 1 et 2,
**caractérisé en ce que**
le second dispositif de transmission (5 - 7) comporte entre deux et quatre, en particulier exactement trois étages de transmission (5, 6, 7) pouvant être alternativement sélectionnés.

4. Système d'entraînement hybride conforme à l'une des revendications 1 à 3,
**caractérisé en ce que**
le premier dispositif de transmission comporte exactement deux étages de transmission (13, 14) pouvant être alternativement sélectionnés, l'étage de transmission le plus long étant de préférence réalisé sous la forme d'un rapport de vitesse du véhicule le plus adapté à la vitesse maximum.

5. Système d'entraînement hybride (1) conforme à l'une des revendications 1 à 4,
**caractérisé en ce qu'**
il comporte exactement une machine électrique (3) permettant la propulsion du véhicule.

6. Système d'entraînement hybride (1) conforme à l'une des revendications 1 à 5,
**caractérisé en ce que**
la sortie de couple de rotation du dispositif de superposition de couple de rotation est réalisée sous la forme d'un arbre de sortie comprenant un étage de pignon de sortie (16), l'étage de pignon de sortie (16) étant de préférence directement relié à un différentiel de l'essieu entraîné du véhicule.

7. Système d'entraînement hybride (1) conforme à l'une des revendications précédentes,
**caractérisé en ce que**
le dispositif de superposition de couple de rotation (4) comprend trois arbres, un premier arbre étant relié à la première entrée de couple de rotation, un second arbre étant relié à la seconde entrée de couple de rotation et le troisième arbre étant relié à la sortie de couple de rotation, et les étages de transmission des dispositifs de transmission sont réalisés sous la forme de jeux de pignons droits qui sont montés sur les arbres respectifs.

8. Système d'entraînement hybride (1) conforme à la revendication 7,
**caractérisé en ce que**
le rapport de démarrage du second dispositif de transmission et/ou un rapport de vitesses supplémentaire du second dispositif de transmission réalisé sous la forme d'un rapport intermédiaire est obtenu par utilisation multiple des jeux de pignons droits.

9. Système d'entraînement hybride (1) conforme à l'une des revendications précédentes,
**caractérisé en ce que**
la puissance nominale du moteur à combustion interne est égale ou supérieure à la puissance nécessaire pour la vitesse maximum du véhicule, et, la puissance de crête du moteur électrique est supérieure à 80% de la puissance nominale du moteur à combustion interne.

10. Système d'entraînement hybride (1) conforme à la revendication 9 et 2,
**caractérisé en ce que**
la puissance nominale du moteur à combustion interne est au maximum égale à 1,5 fois la puissance nécessaire pour la vitesse maximum du véhicule, et la puissance en régime permanent du moteur électrique est supérieure à 80% de la puissance nominale du moteur à combustion interne.
